# EUROPEAN PATENT SPECIFICATION

(11) **EP 3 035 326 B1**
(45) Date of publication and mention of the grant of the patent: **17.07.2019**
(21) Application number: 14307109.0
(22) Date of filing: 19.12.2014
(51) Int. Cl.: G09G 5/00

(54) **Encoding, transmission , decoding and displaying of oriented images**
Codierung, Übertragung, Decodierung und Anzeige von ausgerichteten Bildern
Codage, transmission, décodage et affichage d'images orientées

(43) Date of publication of application: 22.06.2016
(73) Proprietor: Alcatel Lucent, 91620 Nozay (FR)
(72) Inventor: Van Broeck, Sigurd, 2018 Antwerp (BE); Huysegems, Rafaël, 2018 Antwerp (BE)
(74) Representative: D'Halleweyn, Nele Veerle Trees Gertrudis

(56) References cited:
- EP-A1- 0 983 552
- EP-A1- 2 091 242
- EP-A1- 2 784 654
- US-A1- 2008 266 326

## Description

### Field of the Invention

The field of the invention relates to displaying oriented images on an orientable display device. Particular embodiments relate to a method and an orientable display device for displaying an oriented image; a method and an image encoder for encoding a composite image; a method and a content server for providing a composite image to an orientable display device; and a computer program product.

### Background

The plethora of display devices with different form factors like *e.g.* TVs, PCs, tablets, smartphones and smartwatches calls for Responsive Web Design (RWD) allowing the user agent to adapt the content to the display device's characteristics. Such adaptations are applied on page layout and style but also on images. A single reference image is therefore cropped, sized, and art directed by the developer(s) of a Web application in order to provide a set of images adapted to a set of display device characteristics. The user agent is then able to automatically select the image from the set of images (*e.g*., listed in a manifest file) that best suits the display device's characteristics.

However, when a user rotates her device, the Web application's RWD will change. This may impact the image selection process and therefore the image selected from the set of authored images listed in the manifest file. This image selection process is handled by the Web application developer using *e.g*. JavaScript. In that case, Web application developers typically resort to requesting a new image with a different orientation.

Additionally, when RWD is not provided, and a user holds her display device up in portrait mode, the user agent will typically crop and center the landscape image to fit the display width and the unused space above and below the picture will typically be painted black or white. A similar behavior applies to images saved in portrait mode. To get a good view, she will need to orient her display device accordingly.

EP 2 091 242 A1 discloses a digital television broadcast system and mobile telephone, in which content of a data broadcast can be checked with a small marquee display area in a horizontally long display state, and in which checking desired content in detail is easy by switching the display screen to a vertically long display state, while an extracted character string to be displayed is automatically selected.

EP 0 983 552 A1 discloses a system and method for parameterized image orientation for computer displays, accommodating several image orientation modes in a single software driver utilizing the same software instructions for each orientation mode in order to transfer image information to display memory, by using parameters (set at the time an orientation mode is selected) to determine where each successive pixel of information should go in the display memory, allowing the same instructions to be used for each mode.

US 2008/266326 A1 discloses a method for automatic image reorientation in response to a change in relative orientation of a viewer image with respect to a reference image, which reorientation is performed to compensate, at least partially, for the change in relative orientation of the viewer image.

EP 2 784 654 A1 discloses a mobile terminal apparatus comprising an image storage device for storing first and second groups of medical diagnostic images. When a motion of the apparatus is detected by accelerometers/gyroscopes, the image of the same group or different group are shown according to the motion.

### Summary

It is an object of embodiments of the present invention to reduce delay when displaying images on an orientable display device, especially when rotating said orientable display device. Other objects of embodiments of the present invention are to decrease storage requirements for storing images, and adhering to the paradigms of Responsive Web Design (RWD).

According to a first aspect of the invention, there is provided a method for displaying on an orientable display device an oriented image from at least one content server, according to the wording of claim 1.

In the context of the present specification, the word 'orientable' is taken to mean that an object, such as a display device, 'can be oriented', *i.e.,* can be rotated from and to a certain orientation. The word 'orienting' something is taken to mean that something is aligned or positioned relative to other specified positions. The word 'positioning' is taken to mean that something is put or arranged in a particular place or way.

In this manner, by receiving a composite image that comprises information that represents a plurality of oriented images, the display device can intelligently extract from that composite image an oriented image that best corresponds with its determined display device parameters. This requires no extra data transmission and request processing beyond said receiving and said extracting. Since this improves user experience on the basis of a single file, and since no additional Web application programming logic is required, this also adheres to the paradigms of RWD.

In an embodiment, the method comprises requesting an image from said content server. Said receiving is performed in response to said requesting.

In this manner, a single request begets a single response, reducing delay.

In another embodiment, the method comprises detecting a change in the at least one display device parameter of said orientable display device. The method further comprises, in response to detecting said change, the extracting another oriented image from said composite image; and displaying said other oriented image on said orientable display device.

In this manner, changes in the displaying environment are detected and taken into account, such that a user rotating (*i.e.,* rolling) or panning (*i.e.,* moving up, down, left, and/or right) her orientable display device (*i.e*., changing its orientation) need not await requesting, receiving and processing a new image corresponding to a new orientation of the display device.

In another embodiment, said at least one device parameter comprises any one or more of the following: a display device orientation, a display device visible screen region, a display device rotation speed, a display device rotation acceleration, a display device panning direction, a display device panning speed, and a display device panning acceleration.

In this manner, parameters that are relevant to extracting a certain oriented image from the composite image are taken into account.

According to another aspect of the invention, there is provided a method for encoding a composite image, according to claim 4.
The skilled person will understand that the hereinabove described considerations and advantages also apply for embodiments of the method for encoding a composite image, *mutatis mutandis.* Also, embodiments of the method for encoding a composite image may produce an electronic image file format holding said composite image, allowing easy transport and manipulation.

According to another aspect of the invention, there is provided a method for providing a composite image to an orientable display device having an oriented display, according to claim 5.

The skilled person will understand that the hereinabove described considerations and advantages also apply for embodiments of the method for providing a composite image, *mutatis mutandis.* In particular, the skilled person will understand that embodiments of the method for providing a composite image may obtain said composite image from an entity, such as an image encoder, performing the steps of an embodiment of the method for encoding a composite image.

In an embodiment, the method for providing a composite image comprises receiving a request for an image from said orientable display device. Said transmitting is performed in response to said receiving.

In an embodiment of any of the methods described hereinabove, said composite image comprises a plurality of separate oriented images.

In this manner, since at least some of the oriented images are separate from each other, *i.e.* stored independently within a composite image functioning as a container, they can be extracted independently from other oriented images.

In an embodiment of any of the methods described hereinabove, said composite image comprises a plurality of orientation indicators; and wherein each of said oriented images is associated with a corresponding orientation indicator indicating its respective orientation.

In this manner, the most opportune oriented image to be extracted can easily be recognized and extracted. In a further developed embodiment, the composite image may comprise at least three orientation indicators, indicating at least three different orientations.

In an embodiment of any of the methods described hereinabove, said composite image comprises a plurality of entropy-coded oriented images, at least one of which contains at least one reference to at least one substantially equal part of at least one other of said plurality of entropy-coded oriented images. Additionally or alternatively, said composite image comprises at least one base image and at least one corresponding difference image, each difference image containing at least one image portion different from its corresponding base image. Additionally or alternatively, said composite image comprises at least one partial image and at least one corresponding composition indication indicating a positioning for its corresponding partial image.

In this manner, the file size of the composite image can be reduced, improving data storage and data transmission requirements.

In an embodiment of any of the methods described hereinabove, said composite image comprises at least one main image and at least one image formula configured for generating at least one oriented image from said at least one main image.

In this manner, the plurality of oriented images can be efficiently represented using said at least one image formula.

In a further developed embodiment, said at least one image formula comprises at least one locus of oriented image origin points, preferably a continuous circle, ellipse, or rectangle. Alternatively or additionally, each image formula comprises an origin, an orientation and a size.

In this manner, the plurality of oriented images can be efficiently represented using said at least one locus, which may include any one or more (*i.e*., finitely many or infinitely many) origin points for oriented images to be generated from said at least one main image.

According to another aspect of the invention, there is provided an orientable display device for displaying an oriented image from a content server, according to claim 8.
The skilled person will understand that the hereinabove described considerations and advantages also apply for embodiments of the orientable display device, *mutatis mutandis.*

According to another aspect of the invention, there is provided an image encoder for encoding a composite image, according to claim 12.
The skilled person will understand that the hereinabove described considerations and advantages also apply for embodiments of the image encoder, *mutatis mutandis.*

According to another aspect of the invention, there is provided a content server for providing a composite image to an orientable display device as set out in claim 14. Said content server comprises a processor and a transmitter. The processor is configured for obtaining a composite image comprising information representing a plurality of oriented images, preferably relating to a single subject-matter, each oriented image representing a differently oriented region of said composite image. The transmitter is configured for transmitting said composite image to said orientable display device.

The skilled person will understand that the hereinabove described considerations and advantages also apply for embodiments of the content server, *mutatis mutandis.* In particular, the content server may obtain said composite image from, for example, an image encoder included in said origin server, or from a remote image encoder, or from another content server. Also, the content server may obtain said composite image from a local memory storage of said content server, in which said composite image may have been stored beforehand.

According to another aspect of the invention, there is provided a computer program product comprising computer-executable instructions for performing a method when the program is run on a computer, the method comprising the steps of any one of the methods described hereinabove.

The skilled person will understand that the hereinabove described considerations and advantages also apply for embodiments of the computer program product, *mutatis mutandis.*

### Brief Description of the Figures

The accompanying drawings are used to illustrate presently preferred non-limiting exemplary embodiments according to the present invention. The above and other advantages of the features of embodiments according to the invention and objects of the invention will become more apparent and the invention will be better understood from the following detailed description when read in conjunction with the accompanying drawings, in which:
Figure 1 illustrates schematically an embodiment of a system according to the present invention;
Figure 2 illustrates schematically an example composite image used in an embodiment of a method according to the present invention;
Figure 3 illustrates schematically an example composite image used in an embodiment of a method according to the present invention;
Figure 4 illustrates schematically an example composite image used in an embodiment of a method according to the present invention;
Figure 5 illustrates schematically an example composite image used in an embodiment of a method according to the present invention;
Figure 6 illustrates schematically two embodiments of methods according to the present invention; and
Figure 7 illustrates schematically an example composite image used in an embodiment of a method according to the present invention.

### Description of Embodiments

User agents have no means to automatically select the correct image from the set of images based on the device's current rotation. Web application developers have no means to inform user agents of which image to select from the set of images based on the device's current rotation. Portrait and landscape images are therefore handled by the Web application developer using *e.g*. JavaScript. When a user rotates her device, the Web application's RWD will change. This may impact the image selection process and therefore the image selected from the set of authored images listed in the manifest file.

When Web application developers resort to requesting a new, differently oriented image, the additional JavaScript logic for image selection and request partly annihilates the RWD selection process that is already available in the user agent. If no pre-fetch of the new image is done, the request may also delay the rendering of the Web application. Furthermore, the newly selected image (*e.g.* portrait) may have a large overlap with the initial image (*e.g.* landscape). Handling both images as separate Web resources will therefore require more bandwidth than actually needed, increase the time it takes to transfer the image, increase the storage requirements in (intermediate) servers and user agents, and increase the battery depletion rate (and therefore decrease the overall battery lifetime) of mobile user device.

Alternatively, at authoring time, the portrait and landscape image can be combined into a single image and derived from that single image by JavaScript logic using CSS Image Fragments, also referred to as "image slices" or "sprites". The Web developer can then select an image fragment from the combined image depending on the device orientation. The additional Web application logic again partly annihilates the RWD selection process that is already available in the user agent. Also, CSS Image Fragments only support horizontal rectangular selections. So, when the user rotates his screen 45 degrees, there is no other solution than to incorporate yet another image in the sprite which may have large overlap with the already combined portrait or landscape mode. This method is not optimized for fine-grained image rotations. Fine-grained rotations will therefore require more bandwidth than actually needed, increase the time it takes to transfer the image, increase the storage requirements in (intermediate) servers and user agents, and increase the battery depletion rate (and therefore decrease the overall battery lifetime) of mobile user device.

Embodiments according to the invention therefore propose the use of a new image format, *viz.* a composite image, comprising information representing a plurality of oriented images relating preferably to a single subject-matter, each oriented image representing a differently oriented region of said composite image.

By using a plurality of oriented images, an opportune oriented image can be extracted and displayed, depending on one or more display device parameters of an orientable display device, without having to separately transmit multiple images.
By having a composite image whose oriented images relate preferably but not necessarily to a single subject-matter, it is possible to extract and display one or more oriented images in a useful manner (*i.e*., filling the display of the display device in a more effective manner when displayed) depending on such display device parameters, corresponding to user expectations that the display device displays a suitably moved region of the composite image being viewed when handling a display device using continuous movements.
By having each oriented image represent a differently oriented region of said composite image, it is possible to extract and display an opportune oriented image representing a correspondingly oriented region of the composite image depending on such display device parameters.

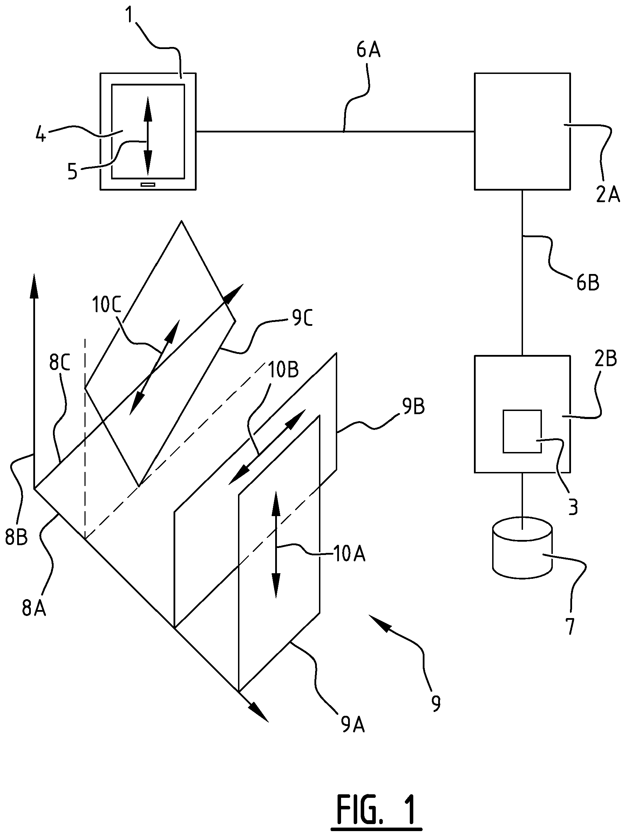

Figure 1 shows a system comprising an orientable display device 1, with a display 4. The orientable display device 1 has an orientation 5. The skilled person will understand that the orientable display device 1 may contain a fixed display 4, such that orienting the orientable display device 1 as a whole necessarily also orients the fixed display 4, or that the orientable display device 1 may contain a separately orientable display 4, such that the separately orientable display 4 may be oriented independently from the orientable display device 1 as a whole. The latter may for instance be the case for smartwatches with an orientable top display.

Figure 1 further shows that the system comprises a first content server 2A and a second content server 2B. The orientable display device 1 is connected to the first content server 2A via a connection 6A, and the first content server 2A is connected to the second content server 2B via a connection 6B. The second content server 2B comprises an image encoder 3, and is connected to a data storage 7. In other embodiments, only a single content server, say content server 2B, may be present, and connections 6A and 6B may be joined without a logical interruption.

In this specific example, the orientable display device 1 requests an image from the first content server 2A, which does not store the relevant image. The first content server 2A requests the image in turn from the second content server 2B. The second content server 2B happens to comprise an image encoder 3 that is configured to encode a composite image 9 comprising information representing a plurality of oriented images relating preferably to a single subject-matter and corresponding to a plurality of differently oriented regions of said composite image 9. In other embodiments, the image encoder 3 may be configured to encode a composite image comprising information representing a plurality of oriented images not relating to a single subject-matter. The image encoder 3 may have already encoded the composite image 9 beforehand, and it may have already been stored in the data storage 7. In that case, the second content server 2B obtains the composite image 9 from the data storage 7, and transmits it via the first content server 2A over connections 6B and 6A, ultimately to the orientable display device 1. If the composite image 9 has not been encoded beforehand, the second content server 2B may obtain the composite image 9 directly from the image encoder 3, and choose whether or not to store the composite image 9 in the data storage 7 for future ease of access. Likewise, the first content server 2A may choose whether or not to store a local copy of the composite image 9 for future ease of access. The orientable display device 1 thus receives the composite image 9. The orientable display device 1 determines at least one display device parameter, such as the display device orientation 5, using *e.g.* position and motion sensors such as an accelerometer, a gravity sensor, a magnetometer, and/or a gyroscope, and/or a display device parameter representing the visible screen region of the display device, *i.e.,* the available space for the image within a parent container being displayed on the display. On the basis of said determined at least one display device parameter, the orientable display device 1 then extracts from the composite image 9 an oriented image that best corresponds to the current conditions of the orientable display device 1. For example, the portrait oriented image 9A may be extracted and displayed on display 4, since its orientation 10A may best correspond momentarily to the determined display device orientation 5, thus providing the best viewing experience for a user of the orientable display device 1.

Other display device parameters than the display device orientation 5, that may alternatively or additionally be used, may comprise any one or more of the following: a display device visible screen region, a display device rotation speed, a display device rotation acceleration, a display device panning direction, a display device panning speed, and a display device panning acceleration.
The display device orientation 5 may be represented as an angle relative to the horizontal, but may also be represented as an angle relative to the vertical, to magnetic earth fields, and/or (in space) relative to the sun's position or to the user's position relative to a beacon.

To provide dynamic responsiveness, the orientable display device 1 may detect changes in the at least one display device parameter - in particular, it may detect a change in the display device orientation 5, and in response to detecting that change, it may extract another, better suited oriented image (say, oriented image 9B) from the composite image 9 and displayed on display 4. Since the composite image has already been requested and received, there is no need to request a new transmission of data, but it is possible to extract another oriented image from the composite image 9. This ensures that the user viewing experience is dynamic and fluent, also when rotating the orientable display device 1, that the Web developer does not need to provide additional programming logic for selecting images, and that new images do not have to be retrieved from the servers 2A-B, which saves on additional requests and round-trip-times, overall bandwidth consumption, storage requirements, and battery energy consumption.

Figure 1 further also shows an example schematic representation of the composite image 9. The composite image 9 comprises information representing a plurality of oriented images 9A-C. In this example, there are three oriented images 9A-C shown along the discrete axis 8A. Each oriented image 9A-C is related preferably to a single subject-matter, meaning that each oriented image depicts a differently oriented region of preferably the same general scene. In other embodiments, the images 9A-C may relate to more than one subject-matter. Each oriented image 9A-C shown in this example has an angular orientation 10A-C, along two dimensional axes 8B-C. The skilled person will understand that the visual representation of the information of the composite image 9 in Figure 1 is meant to aid understanding, and is in no way to be taken as a limitation. In particular, the inclusion of three separate oriented images 9A-C is only one of many approaches. Furthermore, the sizes and angles of the axes 8A-C and of the oriented images 9A-C are only indicative.

The oriented image 9A is shown in portrait orientation 10A, the oriented image 9B is shown in landscape orientation 10B, and the oriented image 9C is shown in a diagonal orientation 10C. In this particular example, three oriented images 9A-C are represented within the composite image 9. In other embodiments, there may be two oriented images represented within the composite image, for example in particular a portrait oriented image and a landscape oriented image. In other embodiments, there may be four or more oriented images represented within the composite image, for example a portrait oriented image, a landscape oriented image, and an oriented image for every 15° step orientation between portrait and landscape, such that the composite image supports more fine-grained orientations of the orientable display device 1.

The composite image may comprise a plurality of orientation indicators, and each oriented image may be associated with a corresponding orientation indicator that indicates its respective orientation. Example orientation indicators may comprise bivalent, trivalent or higher-valence indications: for example the string indications 'portrait', 'landscape' , 'left-diagonal' and 'right-diagonal'; or the degree indications '0°', '90°', '45°', and '135°', and even '15°', '30°', '60°', '75°', etc.; or simply the integer indications '0', '1' and '2', if these indications have been suitably pre-defined to correspond to orientations of, say, 'portrait', 'landscape' and 'diagonal' respectively.

The composite image may be a new container file format or an existing container file format (e.g., a RIFF (Resource Interchange File Format) or GIF (Graphics Interchange Format) container or a CSS (Cascading Style Sheets) sprite) containing multiple oriented images in existing image file formats.

In some embodiments, the order in which the oriented images appear in the container may be pre-defined. The portrait oriented image may for example be provided first, followed by the landscape oriented image, followed by the 45° image, followed by the 315° (-45°) image, etc. Each oriented image may be associated with an image orientation indicator. The image orientation indicators for a certain container as specified above, may be provided in a separate file, or may be linked to each corresponding oriented image within the composite image.

In a further developed embodiment for the CSS sprite, the orientable display device can automatically select an image fragment (based on *e.g.* the actual display device orientation determined by the display device) using an image orientation indicator in the CSS file. The image orientation indicator may be provided as an image fragment. Some examples are provided below.
- Example-image-fragment-1: image('sprites.svg#landscape=0,0,1024,768').
- Example-image-fragment-2: image('sprites.svg#45Degrees=0,768,1267,1267'). Since image fragments as defined in CSS are always horizontally rectangular, the image may contain transparent parts.
- Example-image-fragment-3: image('sprites.svg#portrait=0,2035, 768,1024').

In other embodiments, one or more oriented images in the composite image may be partitioned in one or more parts, where one or more parts of one oriented image are equal to one or more parts of another oriented image, and where each part may be uniquely addressable. In a further developed embodiment, mapping information for the overlapping parts in the oriented images is provided to the image encoder, and relevant information may be stored in the composite image for use by an image decoder. The codec hints will effectively reduce the compressed image size of the composite image, reduce the storage requirements, reduce bandwidth and latency when requested by a user agent running on the orientable display device, and reduce waiting time for the user.

For example, when there is an overlap between a landscape and a portrait oriented image in the CSS sprite composite image containing both oriented images, the hints will define both areas as common. An example is provided below.
- Codec hint: sprites.svg#landscape@128,128,768,768 = sprites.svg#portrait@128,2163, 768,768

In some embodiments with a pre-defined order in which the oriented images appear, the composite image may contain the portrait oriented image first, followed by the difference images between the portrait and the landscape oriented image, followed (or preceded) by a description of the portion of the portrait oriented image that is not used in the landscape oriented image, or *vice versa.*

In certain embodiments, to allow *e.g.* for animation, the oriented images may be animated images. In yet other embodiments, to allow *e.g.* for zooming functionality, the oriented images may be progressive images.

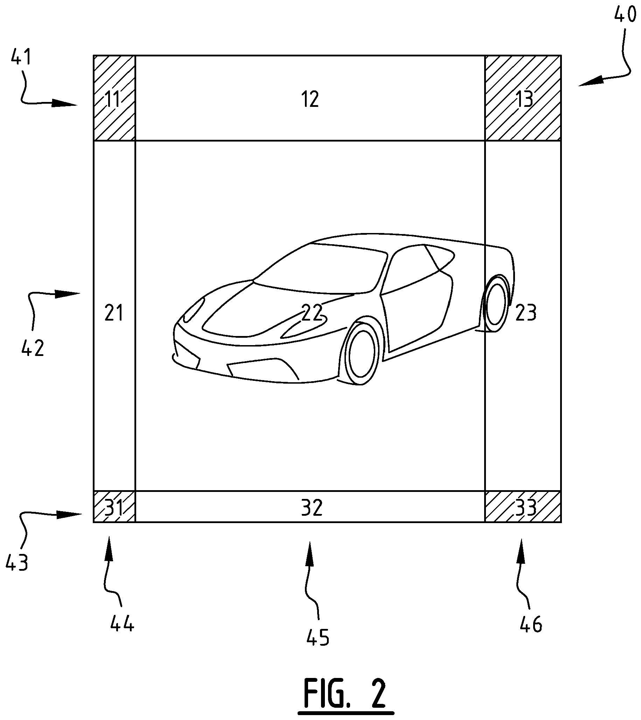

Figure 2 illustrates an example composite image 40 for use in embodiments of a method according to the invention. In particular, a composite image 40 is shown with a matrix division of rows 41-43 and columns 44-46, in which information representing a portrait oriented image 45 and a landscape oriented image 42 is comprised. The difference image between the portrait oriented image 45 and the landscape oriented image 42 would be sections 21 and 23, while the portions not used in landscape mode would be 12 and 32.

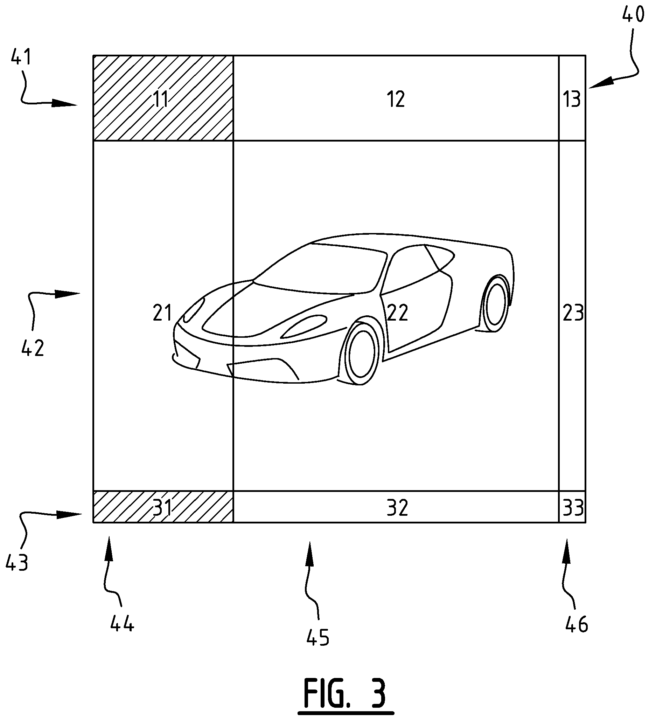

Figure 3 illustrates another example composite image 40 for use in embodiments of a method according to the invention. In particular, composite image 40 with a matrix division of rows 41-43 and columns 44-46 comprises information representing two oriented images, *viz*. a portrait oriented image comprising the sections 12, 13, 22, 23, 32 and 33; and a landscape oriented image comprising the sections 21 and 22 (*i.e.,* not section 23, in this example). The difference image between the portrait oriented image and the landscape oriented image would be section 21, whereas the portions not used in landscape mode would be 12, 13, 23, 32 and 33.

In specific embodiments, the composite image may contain a single image accompanied by parts and composition information. In further developed embodiments, the single image may be a composition of a set of images where the parts that do not contain any information are coded *e.g.* as (transparent) white space. For the example composite image of Figure 2, the white space parts would be 11, 13, 31, and 33. For the example composite image of Figure 3, the white space parts would be 11, and 31.

In other embodiments, the portrait oriented image may for example be provided first and the difference for the landscape oriented image second. Each oriented image may be associated with an image orientation indicator. The image orientation indicators for a certain container as specified above, may be provided in a separate file, or may be linked to each corresponding oriented image within the composite image. In further developed embodiments, each container part may be preceded by an image orientation indicator. In a further embodiment, the image orientation indicator may be provided as text strings, *e.g*. 'portrait', 'landscape', and 'difference'. In further developed embodiments, the image orientation indicator may be provided as a Boolean, *e.g.* 0 ('zero') for portrait, 1 ('one') for the difference image, and 2 ('two') for the portion of the portrait oriented image that is not used.

In other embodiments, the unique as well as the overlapping parts of the oriented images are provided in the composite image and information on the composition of the individual oriented image parts is provided as well. For the illustration in Figure 2, the landscape oriented image comprises parts 21=left, 22=middle, and 23=right while the portrait oriented image comprises parts 12=top, 22=middle, and 32=bottom. For the illustration in Figure 3, the landscape oriented image comprises parts 21=left, 22=middle, and 23=right while the portrait oriented image comprises parts 12=top-left, 13=top-right, 22=middle-left, 23=middle-right, 32=bottom-left, and 33=bottom-right.

In other embodiments, for each part, it is indicated to which mode (*i.e.,* to which oriented image) the part belongs. For the illustration in Figure 2, part 11 does not belong to any mode, part 12 belongs to portrait mode, part 21 belongs to landscape mode and part 22 belongs to portrait and landscape mode. In alternative embodiments, all entire columns may be used for portrait mode, and all entire rows may be used for landscape mode.

In another embodiment, the composite image may contain the overlapping image that is the common part between the portrait oriented image and the landscape oriented image, followed by the difference image between the common image and the landscape oriented image, followed by the difference image between the common image and the portrait oriented image, followed by a location indicator (*e.g*. a pixel offset in horizontal or vertical direction for the landscape oriented image or the portrait oriented image respectively) for each of the oriented images indicating where the common part should be inserted. In specific embodiments, the pixels for the common part in the images may all be a single colour (*e.g.* black) and/or 100% transparent.

In some embodiments, to allow *e.g.* for fine-grained control, orientation indicators may be provided (for example in degrees), as well as the relevant oriented image size and the pixel offset. In embodiments using a CSS sprites composite image contained file format, the user agent running on the orientable display device can automatically select an image fragment (*i.e*., an oriented image), based on the actual device orientation and/or other determined display device parameters, using an image orientation indicator in the CSS file. The image orientation indicator may be provided as a (non-standard) image fragment. Some examples are provided below.
- Example-image-fragment-1: image('sprites.svg#00=250,121,768,1024,0')/* portrait */
- Example-image-fragment-2: image('sprites.svg#45=820,20,768,1024,45').
- Example-image-fragment-3: image('sprites.svg#90=1146,250,768,1024,90')/* landscape */
Note that the last parameter may be optional when using degrees as fragment indicator.

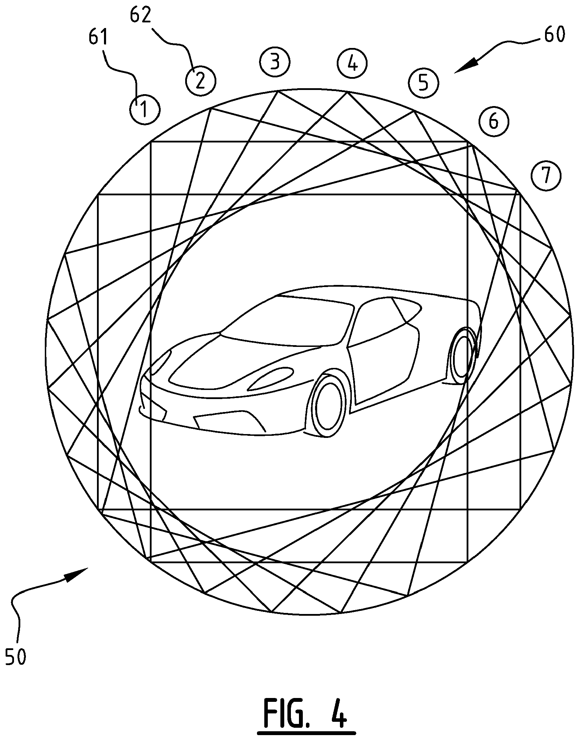

In certain embodiments, the composite image is a 2D region and the pixel offsets, the image size and the image orientation may be determined automatically on the border of the region. Example 2D regions are an ellipse corresponding to the horizontal and vertical image sizes and the pixel offset is determined automatically on the border of the ellipse, or, when the portrait oriented image and landscape oriented image are of equal proportions, a circle. This is illustrated in Figure 4, where the composite image 50 comprises a main image, here in the form of a circle, and information representing a plurality of oriented images 60 each representing a differently oriented region of the composite image 50. Seven oriented images of the plurality of oriented images 60 are indicated in this figure using markings 61, 62, etc. The skilled person will understand that the oriented images 60 are represented on the basis of the main image of composite image 50, such that only one data file with the composite image 50 needs to be transmitted while allowing elegantly to extract multiple oriented images 60 from the one received data file.

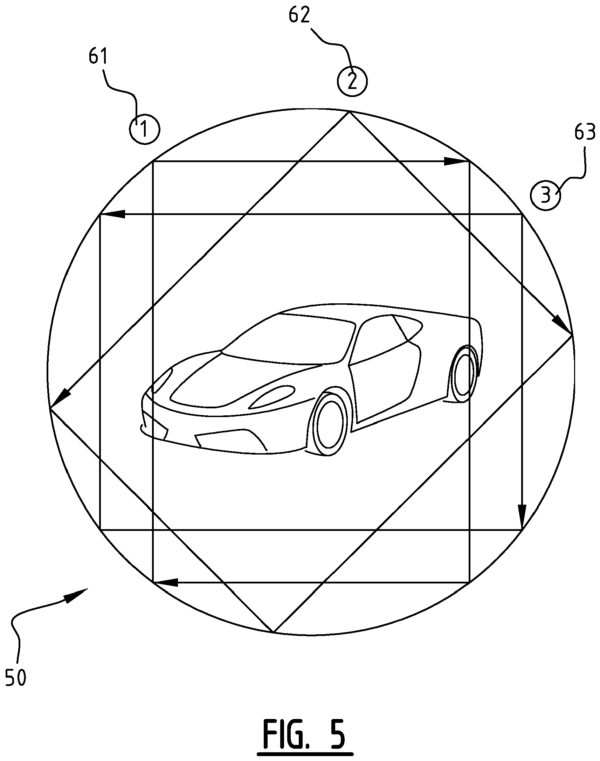

In Figure 5, a composite image 50 is shown that also comprises a main image, here also in the form of a circle as in Figure 4, and information representing a plurality of oriented images, each representing a differently oriented region of the composite image 50. Specifically, the information represent three oriented images indicated with marking 61, 62 and 63, which are a portrait oriented image, a 45° oriented image and a landscape oriented image respectively. As an example, the information may be included in the composite image 50 in the following image fragment form: (1) image('sprites.svg#00), (2) image('sprites.svg#45) and (3) image('sprites.svg#90). The encoder may take the mentioned information into account to more efficiently encode the image.

In some embodiments, the pixel offset, the image size, and the orientation may be provided by means of one or more mathematical formulas. The mathematical formulas may describe a locus of origin points (i.e., pixel offsets) and/or assorted parameters, such as image size and orientation. In further developed embodiments, authored sets of vectors may be provided to mark the image offset, the image size, image ratio, and the orientation.

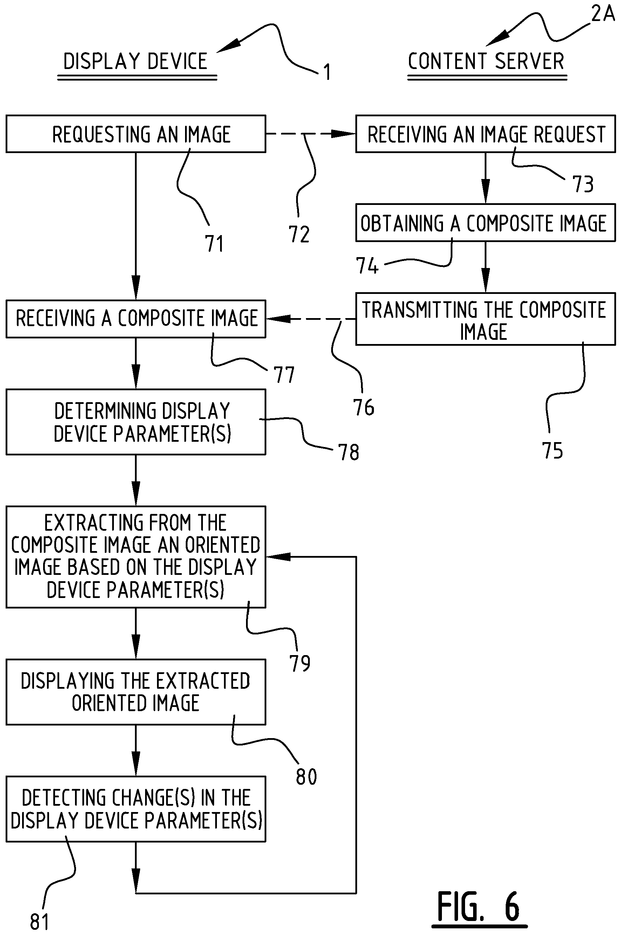

Figure 6 illustrates schematically two embodiments of methods according to the present invention. On the left side, an embodiment of a method for displaying an oriented image on an orientable display device 1 is illustrated. On the right side, an embodiment of a method for providing a composite image to an orientable display device 1 is illustrated, as performed at, for example, a content server 2A. Also, the inter-relationship between these two embodiments is illustrated.

The orientable display device 1 (henceforth 'device 1') first optionally requests 71 an image from a content server 2A. The request is illustrated as dashed arrow 72. The request 72 is received 73 at the content server 2A (henceforth 'server 2A'), of course also optionally. Server 2A next obtains 74 a composite image comprising information representing a plurality of oriented images relating preferably to a single subject-matter, each representing a differently oriented region of said composite image. Server 2A subsequently transmits 75 the composite image. The transmission of the composite image is illustrated as dashed arrow 76. The composite image transmission 76 is received 77 at device 1.

Device 1 determines 78 one or more display device parameters. This may be done prior to receiving 77 the composite image, concurrently, or afterwards, and may be repeated as necessary.

Device 1 extracts 79 from the composite image an oriented image based on the one or more determined display device parameters, and displays 80 the extracted oriented image on its display 4.

Optionally, the embodiment illustrated here also comprises a step wherein device 1 detects 81 change or changes in the display device parameters of device 1. If a change or changes is/are detected, device 1 again extracts 79 and displays 80 an oriented image accordingly.

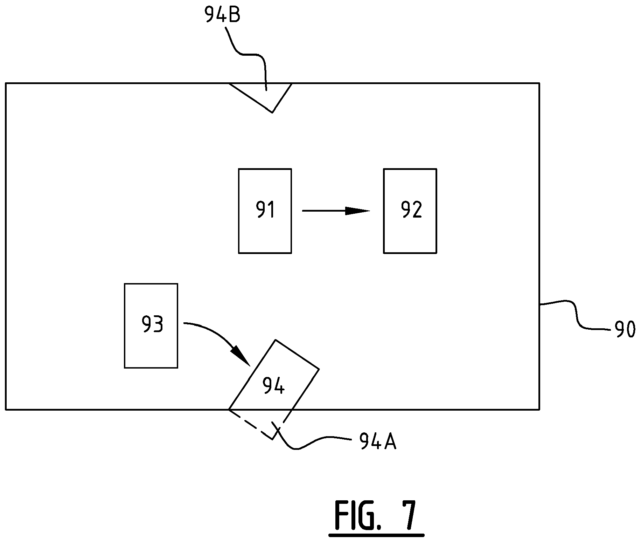

Figure 7 schematically illustrates an example composite image 90 used in an embodiment of a method according to the present invention. The composite image 90 is shown comprising information representing four oriented images 91-94, but the skilled person will understand that there may be fewer or more than four oriented images represented by the information comprised by the composite image 90. The composite image 90 and, by consequence, the oriented images 91-94 preferably relate to a single subject-matter.
In this specific example, a translation and a rotation of an orientable display device are illustrated by respectively oriented images 91 and 92 for the translation on the one hand, and oriented images 93 and 94 for the rotation on the other hand. In particular, the oriented images 91-94 represent differently oriented regions (*i.e*., image regions) of the composite image 90.

Oriented image 92 represents a region of the composite image 90 that is translated (*i.e*., panned) to the right with respect to oriented image 91. If a user has moved an orientable display device in a translation movement to the right while displaying oriented image 91, then the display device could have detected a change in its positioning and could have extracted a new, more opportune oriented image 92, such that the display of the display device retains a sensible and useful picture of the composite image 90.

Oriented image 94 represents a region of the composite image 90 that is rotated clockwise with respect to oriented image 93. If a user has moved an orientable display device in a rotation movement in a clockwise manner while displaying oriented image 91, then the display device could have detected a change in its orientation and could have extracted a new, more opportune oriented image 94, such that the display of the display device retains a sensible and useful picture of the composite image 90.

The skilled person will understand that translation and rotation may also be combined, and that other types of input to or condition of the orientable display device may also alternatively or additionally be used to extract and display one or more oriented images of the composite image.

Moreover, the orientable display device may also determine one or more display device parameters relating to the speed and/or the acceleration of the rotation and/or the translation.

In this particular example, oriented image 94 happens to extend with a part 94A outside of the boundaries of the composite image 90. Certain embodiments of the method may compensate for such an eventuality by substituting a different part 94B of the composite image 90, such that the oriented image 94 that is extracted and displayed by the orientable display device retains as much useful picture area as possible. Other embodiments may alternatively indicate that part 94A is unavailable by displaying it in a different manner, for example as a black or white area.

A person of skill in the art would readily recognize that steps of various above-described methods can be performed by programmed computers. Herein, some embodiments are also intended to cover program storage devices, *e.g*. digital data storage media, which are machine or computer readable and encode machine-executable or computer-executable programs of instructions, wherein said instructions perform some or all of the steps of said above-described methods. The program storage devices may be, *e.g.* digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer.

Whilst the principles of the invention have been set out above in connection with specific embodiments, it is to be understood that this description is merely made by way of example and not as a limitation of the scope of protection which is determined by the appended claims.

## Claims

1. A method for displaying on an orientable display device (1) an oriented image from at least one content server (2A, 2B); said method **characterized by** comprising:
- receiving (77) from said at least one content server a composite image (9, 40, 50, 90) comprising, in a single container file, information representing a plurality of oriented images (9A-C, 61-63, 91-94), each oriented image representing a differently oriented region of said composite image;
- determining (78) at least one display device parameter of said orientable display device;
- extracting (79) from said composite image an oriented image based on said at least one determined display device parameter; and
- displaying (80) said extracted oriented image on said orientable display device.

2. The method of claim 1, comprising:
- detecting (81) a change in the at least one display device parameter of said orientable display device; and
- in response to detecting said change, extracting (79) another oriented image from said composite image in said single container file; and
- displaying (80) said other oriented image on said orientable display device.

3. The method of any one of the previous claims, wherein said at least one device parameter comprises any one or more of the following: a display device orientation, a display device visible screen region, a display device rotation speed, a display device rotation acceleration, a display device panning direction, a display device panning speed, and a display device panning acceleration.

4. A method for encoding a composite image (9, 40, 50, 90); said method **characterized by** comprising:
- determining, for at least one image, a plurality of differently oriented regions;
- generating information representing a plurality of oriented images (9A-C, 61-63, 91-94) corresponding to said plurality of differently oriented regions; and
- encoding a composite image (9, 40, 50, 90) in a single container file comprising said generated information for transmission, via at least one content server (2A, 2B), to an orientable display device (1).

5. A method for providing a composite image (9, 40, 50, 90) to an orientable display device (1); said method **characterized by** comprising, at at least one content server (2A, 2B):
- obtaining (74) a composite image (9, 40, 50, 90) comprising information representing a plurality of oriented images (9A-C, 61-63, 91-94), each oriented image representing a differently oriented region of said composite image; and
- transmitting (75) said composite image to said orientable display device in a single container file.

6. The method of any one of the previous claims, wherein said composite image comprises a plurality of orientation indicators; and wherein each of said oriented images is associated with a corresponding orientation indicator indicating its respective orientation.

7. The method of any one of the previous claims, wherein said composite image comprises at least one of the following configurations:
- a plurality of entropy-coded oriented images, at least one of which contains at least one reference to at least one substantially equal part of at least one other of said plurality of entropy-coded oriented images;
- at least one base image and at least one corresponding difference image, each difference image containing at least one image portion different from its corresponding base image; and
- at least one partial image and at least one corresponding composition indication indicating a positioning for its corresponding partial image.

8. An orientable display device (1) for displaying an oriented image from at least one content server (2A, 2B); said display device **characterized by** comprising:
- a receiver configured for receiving (77) from said at least one content server a composite image (9, 40, 50, 90) in a single container file, the composite image comprising information representing a plurality of oriented images (9A-C, 61-63, 91-94), each oriented image representing a differently oriented region of said composite image;
- a parameter module configured for determining (78) at least one display device parameter of said orientable display device;
- an extractor configured for extracting (79) an oriented image from said composite image based on output from said parameter module; and
- a display configured for displaying (80) said extracted oriented image.

9. Orientable display device (1) according to claim 8 further configured for detecting (81) a change in the at least one display device parameter of said orientable display device; and
- in response to detecting said change, extracting (79) another oriented image from said composite image in said single container file; and
- displaying (80) said other oriented image on said orientable display device.

10. Orientable display device (1) according to claim 8 or 9 wherein said at least one device parameter comprises any one or more of the following: a display device orientation, a display device visible screen region, a display device rotation speed, a display device rotation acceleration, a display device panning direction, a display device panning speed, and a display device panning acceleration.

11. Orientable display device (1) according to any of the previous claims 8 to 10 wherein said composite image comprises a plurality of orientation indicators and wherein each of said oriented images is associated with a corresponding orientation indicator indicating ts respective orientation.

12. An image encoder (3) for encoding a composite image (9, 40, 50, 90); said image encoder **characterized by** comprising:
- an orientation module configured for determining for at least one image a plurality of differently oriented regions; and
- an encoder module configured for generating information representing a plurality of oriented images (9A-C, 61-63, 91-94) corresponding to said plurality of differently oriented regions and for encoding a composite image (9, 40, 50, 90) comprising , in a single container file, said generated information for transmission, via at least one content server (2A, 2B), to an orientable display device (1).

13. Image encoder (3) according to claim 12 wherein said composite image comprises a plurality of orientation indicators and wherein each of said oriented images is associated with a corresponding orientation indicator indicating its respective orientation.

14. A content server (2A, 2B) for providing a composite image (9, 40, 50, 90) to an orientable display device (1); said content server (2A, 2B) **characterized by** comprising:
- a processor configured for obtaining (74) a composite image (9, 40, 50, 90) comprising information representing a plurality of oriented images (9A-C, 61-63, 91-94), each oriented image representing a differently oriented region of said composite image; and
- a transmitter configured for transmitting (75) said composite image to said orientable display device.

15. A computer program product comprising computer-executable instructions for performing a method when the program is run on a computer, the method comprising the steps of any one of the methods of any one of the claims 1-7.

## Patentansprüche

1. Verfahren zum Anzeigen eines ausgerichteten Bildes von mindestens einem Inhaltsserver (2A, 2B) auf einer ausrichtbaren Anzeigevorrichtung (1), wobei das Verfahren **dadurch gekennzeichnet ist, dass** es Folgendes umfasst:
- Empfangen (77) eines zusammengesetzten Bildes (9, 40, 50, 90) von dem mindestens einen Inhaltsserver, das in einer einzelnen Containerdatei Informationen umfasst, die eine Vielzahl von ausgerichteten Bildern (9A-C, 61-63, 91-94) repräsentieren, wobei jedes ausgerichtete Bild einen unterschiedlich ausgerichteten Bereich des zusammengesetzten Bildes repräsentiert;
- Bestimmen (78) von mindestens einem Anzeigevorrichtungsparameter der ausrichtbaren Anzeigevorrichtung;
- Extrahieren (79) auf Basis des mindestens einen bestimmten Anzeigevorrichtungsparameters eines ausgerichteten Bildes aus dem zusammengesetzten Bild und
- Anzeigen (80) des extrahierten ausgerichteten Bildes auf der ausrichtbaren Anzeigevorrichtung.

2. Verfahren nach Anspruch 1, das Folgendes umfasst:
- Detektieren (81) einer Änderung bei dem mindestens einen Anzeigevorrichtungsparameter der ausrichtbaren Anzeigevorrichtung und
- in Reaktion auf das Detektieren der Änderung Extrahieren (79) eines anderen ausgerichteten Bildes aus dem zusammengesetzten Bild in der einzelnen Containerdatei und
- Anzeigen (80) des anderen ausgerichteten Bildes auf der ausrichtbaren Anzeigevorrichtung.

3. Verfahren nach einem der vorhergehenden Ansprüche, wobei der mindestens eine Vorrichtungsparameter ein oder mehrere beliebige der Folgenden umfasst: eine Ausrichtung der Anzeigevorrichtung, einen sichtbaren Bildschirmbereich der Anzeigevorrichtung, eine Drehgeschwindigkeit der Anzeigevorrichtung, eine Drehbeschleunigung der Anzeigevorrichtung, eine Schwenkrichtung der Anzeigevorrichtung, eine Schwenkgeschwindigkeit der Anzeigevorrichtung und eine Schwenkbeschleunigung der Anzeigevorrichtung.

4. Verfahren zum Codieren eines zusammengesetzten Bildes (9, 40, 50, 90); wobei das Verfahren **dadurch gekennzeichnet ist, dass** es Folgendes umfasst:
- Bestimmen einer Vielzahl von unterschiedlich ausgerichteten Bereichen für mindestens ein Bild;
- Erzeugen von Informationen, die eine Vielzahl von ausgerichteten Bildern (9A-C, 61-63, 91-94), die der Vielzahl von unterschiedlich ausgerichteten Bereichen entsprechen, repräsentieren; und
- Codieren eines zusammengesetzten Bildes (9, 40, 50, 90) in einer einzelnen Containerdatei, die die erzeugten Informationen umfasst, zur Übertragung via mindestens einen Inhaltsserver (2A, 2B) zu einer ausrichtbaren Anzeigevorrichtung (1).

5. Verfahren zum Bereitstellen eines zusammengesetzten Bildes (9, 40, 50, 90) für eine ausrichtbare Anzeigevorrichtung (1); wobei das Verfahren **dadurch gekennzeichnet ist, dass** es auf dem mindestens einen Inhaltsserver (2A, 2B) Folgendes umfasst:
- Erhalten (74) eines zusammengesetzten Bildes (9, 40, 50, 90), das Informationen umfasst, die eine Vielzahl von ausgerichteten Bildern (9A-C, 61-63, 91-94) repräsentieren, wobei jedes ausgerichtete Bild einen unterschiedlich ausgerichteten Bereich des zusammengesetzten Bildes repräsentiert; und
- Übertragen (75) des zusammengesetzten Bildes zu der ausrichtbaren Anzeigevorrichtung in einer einzelnen Containerdatei.

6. Verfahren nach einem der vorhergehenden Ansprüche, wobei das zusammengesetzte Bild eine Vielzahl von Ausrichtungsindikatoren umfasst und wobei jedes der ausgerichteten Bilder mit einem entsprechenden Ausrichtungsindikator, der seine jeweilige Ausrichtung anzeigt, verknüpft ist.

7. Verfahren nach einem der vorhergehenden Ansprüche, wobei das zusammengesetzte Bild mindestens eine der folgenden Auslegungen umfasst:
- eine Vielzahl von entropiecodierten ausgerichteten Bildern, von denen mindestens eines mindestens einen Verweis zu mindestens einem im Wesentlichen gleichen Teil von mindestens einem anderen der Vielzahl von entropiecodierten ausgerichteten Bildern enthält;
- mindestens ein Basisbild und mindestens ein entsprechendes Differenzbild; wobei jedes Differenzbild mindestens einen Bildabschnitt enthält, der sich von seinem entsprechenden Basisbild unterscheidet; und
- mindestens ein Teilbild und mindestens eine entsprechende Zusammensetzungsangabe, die eine Positionierung für ihr entsprechendes Teilbild angibt.

8. Ausrichtbare Anzeigevorrichtung (1) zum Anzeigen eines ausgerichteten Bildes von mindestens einem Inhaltsserver (2A, 2B), wobei die Anzeigevorrichtung **dadurch gekennzeichnet ist, dass** sie Folgendes umfasst:
- einen Empfänger, der zum Empfangen (77) eines zusammengesetzten Bildes (9, 40, 50, 90) in einer einzelnen Containerdatei von dem mindestens einen Inhaltsserver ausgelegt ist, wobei das zusammengesetzte Bild Informationen umfasst, die eine Vielzahl von ausgerichteten Bildern (9A-C, 61-63, 91-94) repräsentieren, wobei jedes ausgerichtete Bild einen unterschiedlich ausgerichteten Bereich des zusammengesetzten Bildes repräsentiert;
- ein Parametermodul, das zum Bestimmen (78) von mindestens einem Anzeigevorrichtungsparameter der ausrichtbaren Anzeigevorrichtung ausgelegt ist;
- einen Extrahierer, der zum Extrahieren (79) eines ausgerichteten Bildes aus dem zusammengesetzten Bild auf Basis einer Ausgabe vom Parametermodul ausgelegt ist; und
- eine Anzeige, die zum Anzeigen (80) des extrahierten ausgerichteten Bildes ausgelegt ist.

9. Ausrichtbare Anzeigevorrichtung (1) nach Anspruch 8, die ferner zum Detektieren (81) einer Änderung bei dem mindestens einen Anzeigevorrichtungsparameter der ausrichtbaren Anzeigevorrichtung ausgelegt ist; und
- in Reaktion auf das Detektieren der Änderung Extrahieren (79) eines anderen ausgerichteten Bildes aus dem zusammengesetzten Bild in der einzelnen Containerdatei und
- Anzeigen (80) des anderen ausgerichteten Bildes auf der ausrichtbaren Anzeigevorrichtung.

10. Ausrichtbare Anzeigevorrichtung (1) nach Anspruch 8 oder 9, wobei der mindestens eine Vorrichtungsparameter ein oder mehrere beliebige der Folgenden umfasst: eine Ausrichtung der Anzeigevorrichtung, einen sichtbaren Bildschirmbereich der Anzeigevorrichtung, eine Drehgeschwindigkeit der Anzeigevorrichtung, eine Drehbeschleunigung der Anzeigevorrichtung, eine Schwenkrichtung der Anzeigevorrichtung, eine Schwenkgeschwindigkeit der Anzeigevorrichtung und eine Schwenkbeschleunigung der Anzeigevorrichtung.

11. Ausrichtbare Anzeigevorrichtung (1) nach einem der vorhergehenden Ansprüche 8 bis 10, wobei das zusammengesetzte Bild eine Vielzahl von Ausrichtungsindikatoren umfasst und wobei jedes der ausgerichteten Bilder mit einem entsprechenden Ausrichtungsindikator, der seine jeweilige Ausrichtung anzeigt, verknüpft ist.

12. Bildcodierer (3) zum Codieren eines zusammengesetzten Bildes (9, 40, 50, 90); wobei der Bildcodierer **dadurch gekennzeichnet ist, dass** er Folgendes umfasst:
- ein Ausrichtungsmodul, das zum Bestimmen einer Vielzahl von unterschiedlich ausgerichteten Bereichen für mindestens ein Bild ausgelegt ist; und
- ein Codierermodul, das zum Erzeugen von Informationen, die eine Vielzahl von ausgerichteten Bildern (9A-C, 61-63, 91-94), die der Vielzahl von unterschiedlich ausgerichteten Bereichen entsprechen, repräsentieren, und zum Codieren eines zusammengesetzten Bildes (9, 40, 50, 90), das in einer einzelnen Containerdatei die erzeugten Informationen umfasst, zur Übertragung via mindestens einen Inhaltsserver (2A, 2B) zu einer ausrichtbaren Anzeigevorrichtung (1) ausgelegt ist.

13. Bildcodierer (3) nach Anspruch 12, wobei das zusammengesetzte Bild eine Vielzahl von Ausrichtungsindikatoren umfasst und wobei jedes der ausgerichteten Bilder mit einem entsprechenden Ausrichtungsindikator, der seine jeweilige Ausrichtung anzeigt, verknüpft ist.

14. Inhaltsserver (2A, 2B) zum Bereitstellen eines zusammengesetzten Bildes (9, 40, 50, 90) für eine ausrichtbare Anzeigevorrichtung (1); wobei der Inhaltsserver (2A, 2B) **dadurch gekennzeichnet ist, dass** er Folgendes umfasst:
- einen Prozessor, der zum Erhalten (74) eines zusammengesetzten Bildes (9, 40, 50, 90), das Informationen umfasst, die eine Vielzahl von ausgerichteten Bildern (9A-C, 61-63, 91-94) repräsentieren, ausgelegt ist, wobei jedes ausgerichtete Bild einen unterschiedlich ausgerichteten Bereich des zusammengesetzten Bildes repräsentiert; und
- einen Sender, der zum Übertragen (75) des zusammengesetzten Bildes zu der ausrichtbaren Anzeigevorrichtung ausgelegt ist.

15. Computerprogrammprodukt, das computerausführbare Anweisungen zum Durchführen eines Verfahrens, wenn das Programm auf einem Computer ausgeführt wird, umfasst, wobei das Verfahren die Schritte von einem der Verfahren nach einem der Ansprüche 1-7 umfasst.

## Revendications

1. Procédé d'affichage, sur un dispositif d'affichage orientable (1), d'une image orientée provenant d'au moins un serveur de contenu (2A, 2B) ; ledit procédé **caractérisé en ce qu'**il comprend :
- la réception (77), depuis ledit au moins un serveur de contenu, d'une image composite (9, 40, 50, 90) comprenant, dans un fichier conteneur unique, des informations représentant une pluralité d'images orientées (9A-C, 61-63, 91-94), chaque image orientée représentant une région orientée différemment de ladite image composite ;
- la détermination (78) d'au moins un paramètre de dispositif d'affichage dudit dispositif d'affichage orientable ;
- l'extraction (79), à partir de ladite image composite, d'une image orientée sur la base dudit au moins un paramètre de dispositif d'affichage déterminé ; et
- l'affichage (80) de ladite image orientée extraite sur ledit dispositif d'affichage orientable.

2. Procédé de la revendication 1, comprenant :
- la détection (81) d'une variation de l'au moins un paramètre de dispositif d'affichage dudit dispositif d'affichage orientable ; et
- en réponse à la détection de ladite variation, l'extraction (79) d'une autre image orientée à partir de ladite image composite dans ledit fichier conteneur unique ; et
- l'affichage (80) de ladite autre image orientée sur ledit dispositif d'affichage orientable.

3. Procédé de l'une quelconque des revendications précédentes, dans lequel ledit au moins un paramètre de dispositif comprend l'un quelconque ou plusieurs des paramètres suivants : une orientation du dispositif d'affichage, une région d'écran visible du dispositif d'affichage, une vitesse de rotation du dispositif d'affichage, une accélération de rotation du dispositif d'affichage, une direction de panoramique du dispositif d'affichage, une vitesse de panoramique du dispositif d'affichage, et une accélération de panoramique du dispositif d'affichage.

4. Procédé de codage d'une image composite (9, 40, 50, 90) ; ledit procédé **caractérisé en ce qu'**il comprend :
- la détermination, pour au moins une image, d'une pluralité de régions orientées différemment ;
- la génération d'informations représentant une pluralité d'images orientées (9A-C, 61-63, 91-94) correspondant à ladite pluralité de régions orientées différemment ; et
- le codage d'une image composite (9, 40, 50, 90) dans un fichier conteneur unique comprenant lesdites informations générées pour transmission, par le biais d'au moins un serveur de contenu (2A, 2B), à un dispositif d'affichage orientable (1).

5. Procédé de fourniture d'une image composite (9, 40, 50, 90) à un dispositif d'affichage orientable (1) ; ledit procédé **caractérisé en ce qu'**il comprend, au niveau d'au moins un serveur de contenu (2A, 2B) :
- l'obtention (74) d'une image composite (9, 40, 50, 90) comprenant des informations représentant une pluralité d'images orientées (9A-C, 61-63, 91-94), chaque image orientée représentant une région orientée différemment de ladite image composite ; et
- la transmission (75) de ladite image composite audit dispositif d'affichage orientable dans un fichier conteneur unique.

6. Procédé de l'une quelconque des revendications précédentes, dans lequel ladite image composite comprend une pluralité d'indicateurs d'orientation ; et dans lequel chacune desdites images orientées est associée à un indicateur d'orientation correspondant indiquant son orientation respective.

7. Procédé de l'une quelconque des revendications précédentes, dans lequel ladite image composite comprend au moins une des configurations suivantes :
- une pluralité d'images orientées codées entropiquement, dont au moins une contient au moins une référence à au moins une partie sensiblement égale d'au moins une autre de ladite pluralité d'images orientées codées entropiquement ;
- au moins une image de base et au moins une image de différence correspondante, chaque image de différence contenant au moins une portion d'image différente de son image de base correspondante ; et
- au moins une image partielle et au moins une indication de composition correspondante indiquant un positionnement pour son image partielle correspondante.

8. Dispositif d'affichage orientable (1) destiné à afficher une image orientée provenant d'au moins un serveur de contenu (2A, 2B) ; ledit dispositif d'affichage **caractérisé en ce qu'**il comprend :
- un récepteur configuré pour recevoir (77), depuis ledit au moins un serveur de contenu, une image composite (9, 40, 50, 90) dans un fichier conteneur unique, l'image composite comprenant des informations représentant une pluralité d'images orientées (9A-C, 61-63, 91-94), chaque image orientée représentant une région orientée différemment de ladite image composite ;
- un module de paramètres configuré pour déterminer (78) au moins un paramètre de dispositif d'affichage dudit dispositif d'affichage orientable ;
- un extracteur configuré pour extraire (79) une image orientée à partir de ladite image composite sur la base d'une sortie dudit module de paramètres ; et
- un écran configuré pour afficher (80) ladite image orientée extraite.

9. Dispositif d'affichage orientable (1) selon la revendication 8 également configuré pour détecter (81) une variation de l'au moins un paramètre de dispositif d'affichage dudit dispositif d'affichage orientable ; et
- en réponse à la détection de ladite variation, extraire (79) une autre image orientée à partir de ladite image composite dans ledit fichier conteneur unique ; et
- afficher (80) ladite autre image orientée sur ledit dispositif d'affichage orientable.

10. Dispositif d'affichage orientable (1) selon la revendication 8 ou 9 dans lequel ledit au moins un paramètre de dispositif comprend l'un quelconque ou plusieurs des paramètres suivants :
une orientation du dispositif d'affichage, une région d'écran visible du dispositif d'affichage, une vitesse de rotation du dispositif d'affichage, une accélération de rotation du dispositif d'affichage,
une direction de panoramique du dispositif d'affichage, une vitesse de panoramique du dispositif d'affichage, et une accélération de panoramique du dispositif d'affichage.

11. Dispositif d'affichage orientable (1) selon l'une quelconque des revendications 8 à 10 dans lequel ladite image composite comprend une pluralité d'indicateurs d'orientation et dans lequel chacune desdites images orientées est associée à un indicateur d'orientation correspondant indiquant son orientation respective.

12. Encodeur d'image (3) destiné à coder une image composite (9, 40, 50, 90) ; ledit encodeur d'image **caractérisé en ce qu'**il comprend :
- un module d'orientation configuré pour déterminer, pour au moins une image, une pluralité de régions orientées différemment ; et
- un module de codage configuré pour générer des informations représentant une pluralité d'images orientées (9A-C, 61-63, 91-94) correspondant à ladite pluralité de régions orientées différemment et pour coder une image composite (9, 40, 50, 90) comprenant, dans un fichier conteneur unique, lesdites informations générées pour transmission, par le biais d'au moins un serveur de contenu (2A, 2B), à un dispositif d'affichage orientable (1).

13. Encodeur d'image (3) selon la revendication 12 dans lequel ladite image composite comprend une pluralité d'indicateurs d'orientation et dans lequel chacune desdites images orientées est associée à un indicateur d'orientation correspondant indiquant son orientation respective.

14. Serveur de contenu (2A, 2B) destiné à fournir une image composite (9, 40, 50, 90) à un dispositif d'affichage orientable (1) ; ledit serveur de contenu (2A, 2B) **caractérisé en ce qu'**il comprend :
- un processeur configuré pour obtenir (74) une image composite (9, 40, 50, 90) comprenant des informations représentant une pluralité d'images orientées (9A-C, 61-63, 91-94), chaque image orientée représentant une région orientée différemment de ladite image composite ; et
- un dispositif de transmission configuré pour transmettre (75) ladite image composite audit dispositif d'affichage orientable.

15. Produit-programme informatique comprenant des instructions exécutables par ordinateur pour effectuer un procédé quand le programme est exécuté sur un ordinateur, le procédé comprenant les étapes de l'un quelconque des procédés de l'une quelconque des revendications 1 à 7.
